# EUROPEAN PATENT SPECIFICATION

(11) **EP 3 266 668 B1**
(45) Date of publication and mention of the grant of the patent: **19.02.2025**
(21) Application number: 16465516.9
(22) Date of filing: 06.07.2016
(51) Int. Cl.: B60W 50/14, B60W 30/12, B60W 30/14

(54) **DEVICE FOR DETERMINING DRIVING WARNING INFORMATION**
VORRICHTUNG ZUR BESTIMMUNG VON FAHRWARNUNGSINFORMATIONEN
DISPOSITIF POUR LA DÉTERMINATION DES INFORMATIONS D'AVERTISSEMENT DE CONDUITE

(43) Date of publication of application: 10.01.2018
(73) Proprietor: Continental Autonomous Mobility Germany GmbH, 85057 Ingolstadt (DE)
(72) Inventor: Sav, Claudiu, 300144 Timisoara (RO)
(74) Representative: Continental Corporation

(56) References cited:
- EP-A1- 1 235 052
- EP-A1- 2 899 669
- EP-A2- 1 531 113
- DE-A1- 102013 205 788
- US-A1- 2002 128 751
- US-A1- 2012 036 097
- US-A1- 2013 335 213
- US-B2- 8 013 747

## Description

### FIELD OF THE INVENTION

The present invention relates to a device for determining driving warning information, to a system for determining driving warning information, to a method for determining driving warning information, as well as to a computer program.

### BACKGROUND OF THE INVENTION

The general background of this invention is the field of driving warning systems. Present systems for providing driver warning information, for example for lane departure warning where lanes are delineated by line marking, are based on distance to a line crossing and based on time to a line crossing. Such systems cannot account for various combination of factors that could indicate that a lane line is about to be crossed unintentionally.

US2013/335213A1 describes a method/system for lane departure warning/assistance that warns the driver that the vehicle is about to leave a current lane and enter an adjacent lane. The driver is identified, and a corresponding profile is accessed. The driver's pupils may be measured and compared to pupil size baseline data stored in the accessed profile. If the difference in pupil size exceeds a pupil size baseline by more than a deviation level, the method/system may adjust a lane departure warning/assistance threshold of a lane departure detector that warns the driver each time the vehicle is getting too close to an adjacent lane, thus alerting the driver that the vehicle may drift into the next lane. Driving patterns, such as steering angles and braking force, may also be used to adjust the lane departure warning/assistance threshold and determine whether the driver may benefit from lane departure warning/assistance.

A further lane keeping assistant is disclosed in EP 1 235 052 A1.

### SUMMARY OF THE INVENTION

It would be advantageous to have improved apparatus for determining driving warning information.

The object of the present invention is solved with the subject matter of the independent claims, wherein further embodiments are incorporated in the dependent claims. It should be noted that the following described aspects and examples of the invention apply also for the device for determining driving warning information, the system for determining driving warning information, the method for determining driving warning information, and for the computer program.

In a an aspect, there is provided a device for determining driving warning information as defined in appended claim 1. In another aspect, there is provided a system for determining driving warning information as defined in appended claim 6.

In another aspect, there is provided a method for determining driving warning information as defined in appended claim 8.

According to a first aspect, there is provided a device for determining driving warning information, comprising:
- an input unit;
- a processing unit; and
- an output unit.

The input unit is configured to provide the processing unit with driving relevant data. The processing unit is configured to implement an artificial neural network to process the driving relevant data to generate driving awareness data. The output unit is configured to output driving warning information based on the driving awareness data.

According to the invention, the artificial neural network comprises a recurrent neural network configured with an internal cycle within the recurrent neural network, wherein a feedback connection is used to form the internal cycle, wherein output from the recurrent neural network is fed back into the recurrent neural network.

In this manner, by implementing an artificial neural network to process driving relevant data, the device is able to model the way a human would react to different scenarios, enabling the accurate and timely provision of driving warning information that can be used by a driver to take appropriate action. In this way, various combinations of conditions can be taken into account in order to generate driving awareness data and appropriate output driving warning information, minimising the issuance of unwanted warnings. To put this another way, driving conditions and different drivers can be taken into account in order to provide appropriate driving warning information on the basis of generated driving awareness data.

In this way, the device determines when a warning should be issued and does so in a manner that is intuitive, and therefore both understandable and appropriate to a human. In other words, accurate, timely, and appropriate warning information can be provided to a driver.

Also, driving warning information can be provided in a live manner, meaning that the provision of that information can be adjusted and/or adapted on the basis of driving relevant data.

According to the invention, driving relevant data comprises: a distance to a relevant road marker, a curvature of a relevant lane marker, and a driver identity, and the driving relevant data further comprises one or more of: a vehicle speed, a vehicle acceleration, a steering angle, a status of a turn indicator, an accelerator pedal position, a brake pedal position, a driver interaction with on board systems, and the driving relevant data further comprises; a time of day; a light condition; and a weather condition.

According to the invention, the driving awareness data comprises one or more than one of: a likelihood that a lane departure on the left is not intended; a likelihood that a lane departure on the right is not intended; a level of driver attention; a level of driver fatigue; a likelihood that taking into account the driving relevant data the vehicle speed is too high.

In an example, the driving warning information comprises one or more than one of: a warning presented to a driver that a lane change appears to be unintentional; a warning presented to the driver that their level of attention appears to be deficient; a warning presented to the driver that they appear to be fatigued; a warning presented to the driver that their speed appears to be too high.

In this way, appropriate and timely warning information can be provided to a driver, enabling them to steer back on course, to pay more attention to their driving, take a break; or slow down.

In an example, the artificial neural network comprises a recurrent neural network configured with an internal cycle within the network.

In this manner, by implementing a recurrent neural network with an internal cycle within the network an internal state of the network is created enabling dynamic temporal behaviour to be exhibited. In this way, the driving warning information can be determined dynamically. To put this another way, the device can dynamically adapt to various driver profiles; can continuously adjust to driver status changes like attention, fatigue etc; and can adapt to various driving conditions like day/night, incremental weather conditions etc.

In an example, the artificial neural network comprises a learning algorithm.

In this way, the artificial neural network by having a learning algorithm is self-configurable, in other words is set by itself, in order to detect expected actions, behaviours etc.

In an example, the learning algorithm is taught on the basis of at least one driving scenario.

In this manner, the artificial neural network need only be trained with the relevant amount of scenarios, and there is no need to model the warning algorithm or the human behaviour.

In an example, the artificial neural network is configured to adapt the determined driving warning information on the basis of received driving relevant data.

In this manner, the artificial neural network, which is a recurrent neural network, is able to dynamically adapt to various driver profiles, continuously adjust to driver status changes like attention levels, levels of fatigue, adapt to driving style and changes in driving style, adapt to various driving conditions like day/night, and changes in weather conditions. In other words, the device is provided with a "live" learning/adapting capability.

According to a second aspect, there is provided a system for determining driving warning information, the system comprising:
- at least one data acquisition unit; and
- a device for determining driving warning information according to the first aspect.

The at least one data acquisition unit is configured to acquire the driving relevant data.

In an example, the at least one data acquisition unit comprises a camera.

According to a third aspect, there is provided a method for determining driving warning information, comprising:
a) providing driving relevant data, wherein the driving relevant data comprises: a distance to a relevant road marker, a curvature of a relevant lane marker, and a driver identity, and the driving relevant data further comprises one or more of: a vehicle speed, a vehicle acceleration, a steering angle, a status of a turn indicator, an accelerator pedal position, a brake pedal position, a driver interaction with on board systems, and the driving relevant data further comprises: a time of day; a light condition; and a weather condition;
b) processing the driving relevant data with an artificial neural network to generate driving awareness data, wherein the artificial neural network comprises a recurrent neural network configured with an internal cycle within the network, wherein a feedback connection is used to form the internal cycle, wherein output from the recurrent neural network is fed back into the recurrent neural network, and wherein the driving awareness data comprises one or more than one of: a likelihood that a lane departure on the left is not intended; a likelihood that a lane departure on the right is not intended; a level of driver attention; a level of driver fatigue, a likelihood that taking into account the driving relevant data the vehicle speed is too high; and
c) outputting driving warning information based on the driving awareness data.

According to another aspect, there is provided a computer program controlling apparatus as previously described which, in the computer program is executed by processing unit, is adapted to perform the method steps as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for determining driving warning information;
Fig. 2 shows a schematic set up of an example of a system for determining driving warning information;
Fig. 3 shows a method for determining driving warning information;
Figs. 4 and 5 show examples of an artificial neural network implemented within examples of the device, system and method for determining driving warning information.

### DETAILED DESCRIPTION OF EMBODIMENTS

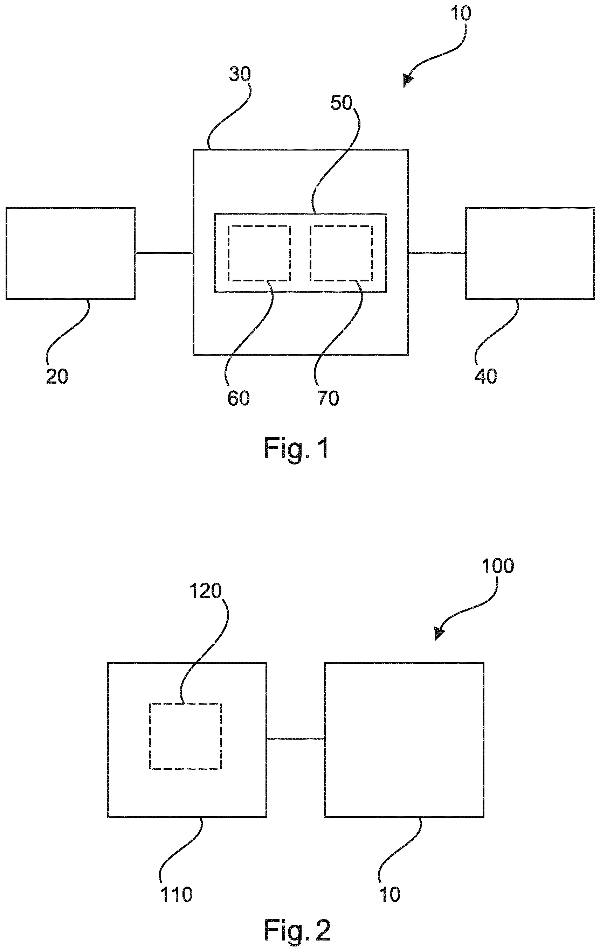

Fig. 1 shows an example of a device 10 for determining driving warning information. The device 10 comprises an input unit 20, a processing unit 30, and an output unit 40. The input unit 20 is configured to provide the processing unit 30 with driving relevant data. The processing unit 30 is configured to implement an artificial neural network 50 to process the driving relevant data to generate driving awareness data. The output unit 40 is configured to output driving warning information based on the driving awareness data.

In an example, the device is configured to adapt to a driver profile. In an example, the device is configured to save a driver configuration. In this manner, when a driver is detected for whom configuration data is available, the device can adapt to that driver on the basis of the configuring and does not have to re-adapt to the driver. In an example, the saved driver configuration is updated on the basis of driving relevant data. In an example, different configurations can be saved for different drivers.

According to an example, the driving relevant data comprises one or more than one of: a distance to a relevant road marker; a curvature of a relevant lane marker; a vehicle speed; a vehicle acceleration; a steering angle; a status of a turn indicator; a time of day; a light condition; a weather condition; a driver identity; an accelerator pedal position; a brake pedal position; a driver interaction with on board systems.

In an example, a driver interaction with onboard systems includes interaction with one or more of a radio, a navigation system or a phone.

According to an example, the driving awareness data comprises one or more than one of: a likelihood that a lane departure on the left is not intended; a likelihood that a lane departure on the right is not intended; a level of driver attention; a level of driver fatigue; a likelihood that taking into account the driving relevant data the vehicle speed is too high.

According to an example, the driving warning information comprises one or more than one of: a warning presented to a driver that a lane change appears to be unintentional; a warning presented to the driver that their level of attention appears to be deficient; a warning presented to the driver that they appear to be fatigued; a warning presented to the driver that their speed appears to be too high.

According to an example, the artificial neural network 50 comprises a recurrent neural network 60 configured with an internal cycle within the network.

In an example, the recurrent neural network (RNN) 60 is configured to use an internal memory to process the driving relevant data as an arbitrary sequence of inputs.

In an example, a feedback connection is used to form the internal cycle.

In this manner, because the processing of future inputs can be altered by the previous output values the behaviour will exhibit a temporal dynamic behaviour.

According to an example, the artificial neural network 50 comprises a learning algorithm 70.

According to an example, the learning algorithm 70 is taught on the basis of at least one driving scenario.

In an example, the training comprises the use of an off-the-shelf procedure such as "Gradient descent" in order to minimize training errors. Other off the shelf procedures can be used.

In an example, a training set is made of field recordings comprising different driving conditions. In an example, these recordings are revived and the expected output is saved and used as reference material for training.

In an example, the learning algorithm is a deep learning algorithm.

In other words, a supervised learning algorithm is utilized.

According to an example, the artificial neural network 50 is configured to adapt the determined driving warning information on the basis of received driving relevant data.

Fig. 2 shows an example of a system 100 for determining driving warning information. The system 100 comprises at least one data acquisition unit 110, and a device 10 for determining driving warning information as described with respect to any of the examples of Fig. 1. The at least one data acquisition unit 110 is configured to acquire the driving relevant data.

In an example, the at least one data acquisition unit is configured to provide the driving relevant data to the input unit. In an example, the input unit comprises the at least one data acquisition unit.

According to an example, the at least one data acquisition unit 110 comprises a camera 120. The camera 120 can be a forward looking camera, and/or a sideways looking camera. The camera 120 can provide imagery that is used to determine a distance to road lane markers, the curvature of road lane markers, the distance to the kerb, the distance to the car in front, and can be used to provide imagery that is used to determine the change in these parameters. The processing unit 30 processes the imagery to determine this information.

In an example, the at least one data acquisition unit comprises a speedometer. In an example, the at least one data acquisition unit comprises a steering wheel orientation monitor. In an example, the at least one data acquisition unit comprises a turn indicator status monitor. In an example, the at least one data acquisition unit comprises a clock. In an example, the at least one data acquisition unit comprises a light monitor. In an example, the at least one data acquisition unit comprises a module configured to download weather report information. In an example, the at least one data acquisition unit is configured to provide information relating to the identity of the driver. For example, the weight of the driver could be determined to provide information relating to the driver identity. For example, the seat position, and/or steering wheel position, and/or mirror position can be determined in order to provide information relating to the driver identity. For example, the driver identity could be provided from a central processor of a vehicle, which was provided with this information by the driver as part of entering and setting up the vehicle for driving.

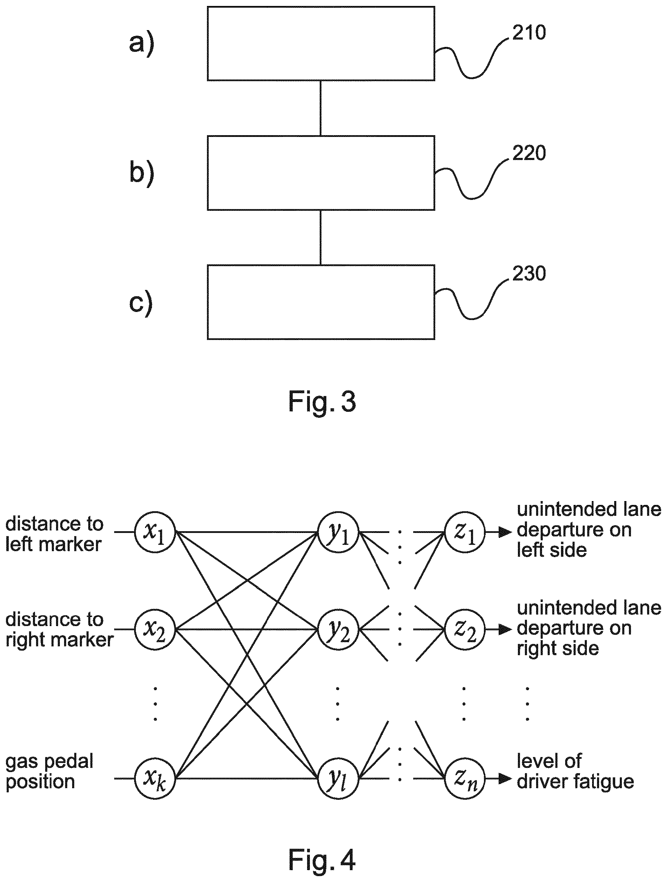

Fig. 3 shows a method 200 for determining driving warning information in its basic steps. The method comprises:
in a providing step 210, also referred to as step a), driving relevant data is provided;
in a processing step 220, also referred to as step b), the driving relevant data is processed with an artificial neural network to generate driving awareness data; and
in an outputting step 230, also referred to as step c), driving warning information is output based on the driving awareness data.

In an example, the driving relevant data is provided by an input unit 20. In an example a processing unit 30 implements the artificial neural network. In an example, an output unit 40 outputs the driving warning information.

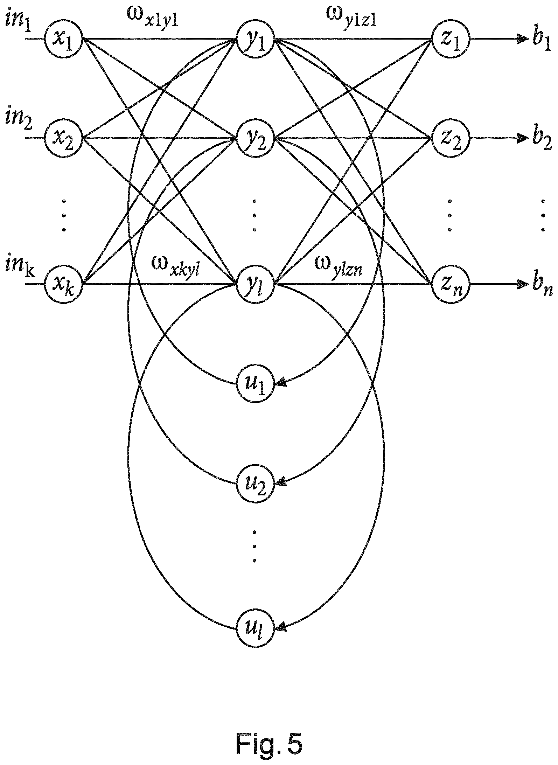

Figs. 4 and 5 show examples of an artificial neural network implemented within examples of the device, system and method for determining driving warning information.

As shown in Figs 4 and 5 an artificial neural network (ANN) is used in order to model the way in actual human react to different scenarios. The ANN is fed with various inputs from a camera that is viewing the road scene. The inputs include: distance to relevant lane markers; curvature of relevant lane markers. The ANN is also fed with inputs coming from different systems within the car, such as: speed; acceleration; steering angle; turn indicator status; an accelerator pedal position; a brake pedal position; a driver interaction with on board system. The ANN is also fed with information derived from sensors on the car, and/or from information downloaded externally. This information includes: time; lighting conditions; weather conditions. The ANN is also fed with information relating to the driver identity. This can be provided directly, in terms that the driver has input their identity either directly or indirectly through use of a bespoke key that opens and starts the car. This can be provided indirectly, through information such as seat position, mirror positions, steering wheel position, driving style.

The ANN then outputs the following relevant data:
- the likelihood that the lane departure on left/right side not intended;
- the level of driver attention;
- the level of driver fatigue.

The constitutive unit of an ANN is the "Artificial Neuron". An artificial neuron is a mathematical function conceived as a model of biological neurons. The artificial neuron receives the one or more inputs (representing dendrites) and sums them to produce an output (representing a neuron's axon). The sums of each node are weighted, and the sum is passed through a non-linear function known as an activation function. The ANN is composed of several layers. Each layer contains several neurons. The neurons in a layer receive inputs from a previous layer and pass the processed output to the next layer. The ANN topology used in actually a Recurrent NN topology that are accepts feedback connection, but a non recurrent ANN can be utilised. The number of intermediate layers determines the depth of the ANN.

The inputs propagated through each layer in a cascading pattern until the last layer where the ANN output will be available.

By using the ANN in this manner, the outputs provided are intuitive to the driver in that the outputs are derived in a manner similar to how a human would derive the outputs. Also, the warning information is provided that takes into account the driver is in the driving conditions. Warning information is then provided at the right time according to different situations and different input parameters.

In the recurrent neural network (RNN) as shown in Fig. 5, there are connections which form an internal cycle inside the network. This creates an internal state of the network which allows it to exhibit dynamic temporal behaviour. In this manner, a lane departure warning function can adapt during running time. In the RNN the internal cycle is formed using a feedback connection. Because the output is feed back in the NN the output value is not lost and creates an internal state. Because the processing of future inputs can be altered by the previous output values the behavior will be temporal dynamic.

With the artificial neural network (ANN) provided here there is no need to model the workings of the algorithm or human behaviour. Rather, the ANN is trained with the relevant amount of scenarios in it then sets itself in order to detect the expected actions, behaviours.

For this training an off-the-shelf "Gradient descent" procedure is used, in order to minimize training error. Other training procedures can be used. For this specific problem the training set is made of field recordings spanning many hours of driving in multitude driving conditions. These recordings are revived and the expected output is saved and used as reference for training.

After initial training RNN can then adapt during running time, providing the following features:
- dynamically adapting to various driver profiles;
- continuously adjusting to driver status changes like attention, fatigue et cetera;
- adapting to various driving conditions like day/night, changing weather conditions et cetera.

The device, system and method are described with respect to the automotive sector and the provision of warning information, such as lane departure warnings. However, the device, system and method are applicable to any other field with a human action or inaction can result in significant material losses or even human accidents. This includes, heavy machine operations, railway arbitration, industrial processes/powerplant supervision.

In another exemplary embodiment, a computer program is provided that is characterized by being configured to execute the method steps of the method according to one of the preceding embodiments, on an appropriate system.

The computer program might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program stored on it which computer program is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining driving warning information, comprising:
- an input unit (20);
- a processing unit (30); and
- an output unit (40);
wherein, the input unit is configured to provide the processing unit with driving relevant data;
wherein the driving relevant data comprises: a distance to a relevant road marker, a curvature of a relevant lane marker, and a driver identity, and the driving relevant data further comprises one or more of: a vehicle speed, a vehicle acceleration, a steering angle, a status of a turn indicator, an accelerator pedal position, a brake pedal position, a driver interaction with on board systems, and the driving relevant data further comprises; a time of day; a light condition; and a weather condition;
wherein, the processing unit is configured to implement an artificial neural network (50) to process the driving relevant data to generate driving awareness data;
wherein the artificial neural network (50) comprises a recurrent neural network (60) configured with an internal cycle within the recurrent neural network, wherein a feedback connection is used to form the internal cycle, wherein output from the recurrent neural network is fed back into the recurrent neural network; and
wherein the driving awareness data comprises one or more than one of: a likelihood that a lane departure on the left is not intended; a likelihood that a lane departure on the right is not intended; a level of driver attention; a level of driver fatigue, a likelihood that taking into account the driving relevant data the vehicle speed is too high; and
wherein, the output unit is configured to output driving warning information based on the driving awareness data.

2. Device according to claims 1, wherein the driving warning information comprises one or more than one of: a warning presented to a driver that a lane change appears to be unintentional; a warning presented to the driver that their level of attention appears to be deficient; a warning presented to the driver that they appear to be fatigued; a warning presented to the driver that their speed appears to be too high.

3. Device according to any of claims 1-2, wherein the artificial neural network (50) comprises a learning algorithm (70).

4. Device according to claim 3, wherein the learning algorithm (70) is taught on the basis of at least one driving scenario.

5. Device according to any of claims 1 or 3-4, wherein the artificial neural network (50) is configured to adapt the determined driving warning information on the basis of received driving relevant data.

6. A system (100) for determining driving warning information, the system comprising:
- at least one data acquisition unit (110); and
- a device (10) for determining driving warning information according to any one of the preceding claims;
wherein the at least one data acquisition unit is configured to acquire the driving relevant data.

7. System according to claim 6, wherein the at least one data acquisition unit (110) comprises a camera (120).

8. A method (200) for determining driving warning information, comprising:
a) providing (210) driving relevant data, wherein the driving relevant data comprises: a distance to a relevant road marker, a curvature of a relevant lane marker, and a driver identity, and the driving relevant data further comprises one or more of: a vehicle speed, a vehicle acceleration, a steering angle, a status of a turn indicator, an accelerator pedal position, a brake pedal position, a driver interaction with on board systems, and the driving relevant data further comprises: a time of day; a light condition; and a weather condition;
b) processing (220) the driving relevant data with an artificial neural network to generate driving awareness data, wherein the artificial neural network (50) comprises a recurrent neural network (60) configured with an internal cycle within the network, wherein a feedback connection is used to form the internal cycle, wherein output from the recurrent neural network is fed back into the recurrent neural network, and wherein the driving awareness data comprises one or more than one of: a likelihood that a lane departure on the left is not intended; a likelihood that a lane departure on the right is not intended; a level of driver attention; a level of driver fatigue, a likelihood that taking into account the driving relevant data the vehicle speed is too high; and
c) outputting (230) driving warning information based on the driving awareness data.

9. A computer program for controlling an apparatus according to any one of claims 1 to 5 and/or a system according to any one of claims 6-7, comprising instructions, which, when the program is executed by a processor, cause the processor to carry out the method of claim 8.

## Patentansprüche

1. Vorrichtung (10) zum Bestimmen von Fahrwarnungsinformationen, die Folgendes umfasst:
- eine Eingabeeinheit (20);
- eine Verarbeitungseinheit (30); und
- eine Ausgabeeinheit (40);
wobei die Eingabeeinheit ausgebildet ist, der Verarbeitungseinheit fahrrelevante Daten bereitzustellen;
wobei die fahrrelevanten Daten Folgendes umfassen: einen Abstand zu einer relevanten Straßenmarkierung, eine Krümmung einer relevanten Fahrbahnmarkierung und eine Fahreridentität, und die fahrrelevanten Daten ferner eines oder mehrere der folgenden Elemente umfassen: eine Fahrzeuggeschwindigkeit, eine Fahrzeugbeschleunigung, einen Lenkwinkel, einen Status eines Blinkers, eine Gaspedalstellung, eine Bremspedalstellung, eine Interaktion des Fahrers mit bordeigenen Systemen, und die fahrrelevanten Daten ferner Folgendes umfassen: eine Tageszeit, einen Lichtzustand und einen Wetterzustand;
wobei die Verarbeitungseinheit ausgebildet ist, ein künstliches neuronales Netzwerk (50) zu implementieren, um die fahrrelevanten Daten zu verarbeiten, um Fahrbewusstseinsdaten zu erzeugen;
wobei das künstliche neuronale Netzwerk (50) ein rekurrentes neuronales Netzwerk (60) umfasst, das mit einem internen Zyklus innerhalb des rekurrenten neuronalen Netzwerks ausgebildet ist, wobei eine Rückkopplungsverbindung verwendet wird, um den internen Zyklus zu bilden, wobei eine Ausgabe von dem rekurrenten neuronalen Netzwerk in das rekurrente neuronale Netzwerk zurückgeführt wird; und
wobei die Fahrbewusstseinsdaten eines oder mehrere der folgenden Merkmale umfassen: eine Wahrscheinlichkeit, dass ein Verlassen der Fahrspur nach links nicht beabsichtigt ist; eine Wahrscheinlichkeit, dass ein Verlassen der Fahrspur nach rechts nicht beabsichtigt ist; einen Grad der Aufmerksamkeit des Fahrers; einen Grad der Ermüdung des Fahrers; eine Wahrscheinlichkeit, dass unter Berücksichtigung der fahrrelevanten Daten die Geschwindigkeit des Fahrzeugs zu hoch ist; und
wobei die Ausgabeeinheit ausgebildet ist, um Fahrwarnungsinformationen basierend auf den Fahrbewusstseinsdaten auszugeben.

2. Vorrichtung nach Anspruch 1, wobei die Fahrwarnungsinformationen eine oder mehrere der folgenden Informationen umfassen: eine Warnung, die dem Fahrer angezeigt wird, dass ein Fahrspurwechsel unbeabsichtigt zu sein scheint; eine Warnung, die dem Fahrer angezeigt wird, dass sein Aufmerksamkeitsniveau mangelhaft zu sein scheint; eine Warnung, die dem Fahrer angezeigt wird, dass er müde zu sein scheint; eine Warnung, die dem Fahrer angezeigt wird, dass seine Geschwindigkeit zu hoch zu sein scheint.

3. Vorrichtung nach einem der Ansprüche 1-2, wobei das künstliche neuronale Netzwerk (50) einen Lernalgorithmus (70) umfasst.

4. Vorrichtung nach Anspruch 3, wobei der Lernalgorithmus (70) anhand von mindestens einem Fahrszenario eingelernt wird.

5. Vorrichtung nach einem der Ansprüche 1 oder 3-4, wobei das künstliche neuronale Netzwerk (50) ausgebildet ist, um die bestimmten Fahrwarnungsinformationen auf der Grundlage empfangener fahrrelevanter Daten anzupassen.

6. System (100) zum Bestimmen von Fahrwarnungsinformationen, wobei das System Folgendes umfasst:
- mindestens eine Datenerfassungseinheit (110); und
- eine Vorrichtung (10) zum Bestimmen von Fahrwarnungsinformationen gemäß einem
der vorhergehenden Ansprüche;
wobei die mindestens eine Datenerfassungseinheit ausgebildet ist, um die fahrrelevanten Daten zu erfassen.

7. System nach Anspruch 6, wobei die mindestens eine Datenerfassungseinheit (110) eine Kamera (120) umfasst.

8. Verfahren (200) zum Bestimmen von Fahrwarnungsinformationen, das Folgendes umfasst:
a) Bereitstellen (210) fahrrelevanter Daten, wobei die fahrrelevanten Daten Folgendes umfassen: eine Entfernung zu einer relevanten Straßenmarkierung, eine Krümmung einer relevanten Fahrbahnmarkierung und eine Fahreridentität, und die fahrrelevanten Daten ferner eines oder mehrere der Folgenden umfassen: eine Fahrzeuggeschwindigkeit, eine Fahrzeugbeschleunigung, einen Lenkwinkel, einen Status eines Blinkers, eine Gaspedalposition, eine Bremspedalposition, eine Fahrerinteraktion mit Bordsystemen, und die fahrrelevanten Daten ferner Folgendes umfassen: eine Tageszeit, eine Lichtbedingung und eine Wetterbedingung;
b) Verarbeiten (220) der fahrrelevanten Daten mit einem künstlichen neuronalen Netzwerk, um Fahrbewusstseinsdaten zu erzeugen, wobei das künstliche neuronale Netzwerk (50) ein rekurrentes neuronales Netzwerk (60) umfasst, das mit einem internen Zyklus innerhalb des Netzwerks ausgebildet ist, wobei eine Rückkopplungsverbindung verwendet wird, um den internen Zyklus auszubilden, wobei eine Ausgabe von dem rekurrenten neuronalen Netzwerk in das rekurrente neuronale Netzwerk zurückgeführt wird, und wobei die Fahrbewusstseinsdaten eines oder mehr als eines von Folgendem umfassen eine Wahrscheinlichkeit, dass ein Verlassen der Fahrspur nach links nicht beabsichtigt ist; eine Wahrscheinlichkeit, dass ein Verlassen der Fahrspur nach rechts nicht beabsichtigt ist; einen Grad der Aufmerksamkeit des Fahrers; einen Grad der Müdigkeit des Fahrers; eine Wahrscheinlichkeit, dass unter Berücksichtigung der fahrrelevanten Daten die Geschwindigkeit des Fahrzeugs zu hoch ist; und
c) Ausgeben (230) von Fahrwarnungsinformationen basierend auf den Fahrbewusstseinsdaten.

9. Computerprogramm zur Steuerung eines Geräts nach einem der Ansprüche 1 bis 5 und/oder eines Systems nach einem der Ansprüche 6-7, mit Anweisungen, die, wenn das Programm von einem Prozessor ausgeführt wird, den Prozessor veranlassen, das Verfahren nach Anspruch 8 auszuführen.

## Revendications

1. Dispositif (10) de détermination d'informations d'avertissement de conduite, comportant :
- une unité (20) d'entrée ;
- une unité (30) de traitement ; et
- une unité (40) de sortie ;
l'unité d'entrée étant configurée pour fournir à l'unité de traitement des données pertinentes pour la conduite ;
les données pertinentes pour la conduite comportant : une distance à une balise routière pertinente, une courbure d'un repère de voie pertinent et une identité du conducteur, et les données pertinentes pour la conduite comportant en outre un ou plusieurs éléments parmi : une vitesse du véhicule, une accélération du véhicule, un angle de direction, un état d'un clignotant, une position de pédale d'accélérateur, une position de pédale de frein, une interaction du conducteur avec des systèmes embarqués, et les données pertinentes pour la conduite comportant en outre ; une heure de la journée ; une condition d'éclairement ; et une condition météorologique ;
l'unité de traitement étant configurée pour mettre en œuvre un réseau neuronal artificiel (50) pour traiter les données pertinentes pour la conduite afin de générer des données de perception de conduite ;
le réseau neuronal artificiel (50) comportant un réseau neuronal récurrent (60) configuré avec un cycle interne à l'intérieur du réseau neuronal récurrent, une connexion de rétroaction étant utilisée pour former le cycle interne, une sortie provenant du réseau neuronal récurrent étant renvoyée dans le réseau neuronal récurrent ; et
les données de perception de conduite comportant un ou plusieurs éléments parmi : une probabilité qu'une sortie de voie sur la gauche ne soit pas intentionnelle ; une probabilité qu'une sortie de voie sur la droite ne soit pas intentionnelle ; un niveau d'attention du conducteur ; un niveau de fatigue du conducteur, une probabilité que, compte tenu des données pertinentes pour la conduite, la vitesse du véhicule soit trop élevée ; et
l'unité de sortie étant configurée pour délivrer des informations d'avertissement de conduite d'après les données de perception de conduite.

2. Dispositif selon la revendication 1, les informations d'avertissement de conduite comportant un ou plusieurs éléments parmi : un avertissement présenté à un conducteur selon lequel un changement de voie semble être involontaire ; un avertissement présenté au conducteur selon lequel son niveau d'attention semble être déficient ; un avertissement présenté au conducteur selon lequel il semble fatigué ; un avertissement présenté au conducteur selon lequel sa vitesse semble trop élevée.

3. Dispositif selon l'une quelconque des revendications 1 à 2, le réseau neuronal artificiel (50) comportant un algorithme (70) d'apprentissage.

4. Dispositif selon la revendication 3, l'algorithme (70) d'apprentissage étant enseigné sur la base d'au moins un scénario de conduite.

5. Dispositif selon l'une quelconque des revendications 1 ou 3 à 4, le réseau neuronal artificiel (50) étant configuré pour adapter les informations d'avertissement de conduite déterminées d'après des données reçues pertinentes pour la conduite.

6. Système (100) de détermination d'informations d'avertissement de conduite, le système comportant :
- au moins une unité (110) d'acquisition de données ; et
- un dispositif (10) de détermination d'informations d'avertissement de conduite selon l'une quelconque
des revendications précédentes ;
l'unité ou les unités d'acquisition de données étant configurées pour acquérir les données pertinentes pour la conduite.

7. Système selon la revendication 6, l'unité ou les unités (110) d'acquisition de données comportant une caméra (120).

8. Procédé (200) de détermination d'informations d'avertissement de conduite, comportant les étapes consistant à :
a) fournir (210) des données pertinentes pour la conduite, les données pertinentes pour la conduite comportant : une distance à une balise routière pertinente, une courbure d'un repère de voie pertinent et une identité du conducteur, et les données pertinentes pour la conduite comportant en outre un ou plusieurs éléments parmi : une vitesse du véhicule, une accélération du véhicule, un angle de direction, un état d'un clignotant, une position de pédale d'accélérateur, une position de pédale de frein, une interaction du conducteur avec des systèmes embarqués, et les données pertinentes pour la conduite comportant en outre : une heure de la journée ; une condition d'éclairement ; et une condition météorologique ;
b) traiter (220) les données pertinentes pour la conduite à l'aide d'un réseau neuronal artificiel pour générer des données de perception de conduite, le réseau neuronal artificiel (50) comportant un réseau neuronal récurrent (60) configuré avec un cycle interne à l'intérieur du réseau, une connexion de rétroaction étant utilisée pour former le cycle interne, une sortie provenant du réseau neuronal récurrent étant renvoyée dans le réseau neuronal récurrent, et les données de perception de conduite comportant un ou plusieurs éléments parmi : une probabilité qu'une sortie de voie sur la gauche ne soit pas intentionnelle ; une probabilité qu'une sortie de voie sur la droite ne soit pas intentionnelle ; un niveau d'attention du conducteur ; un niveau de fatigue du conducteur, une probabilité que, compte tenu des données pertinentes pour la conduite, la vitesse du véhicule soit trop élevée ; et
c) délivrer (230) des informations d'avertissement de conduite d'après les données de
perception de conduite.

9. Programme informatique destiné à commander un appareil selon l'une quelconque des revendications 1 à 5 et/ou un système selon l'une quelconque des revendications 6 à 7, comportant des instructions qui, lorsque le programme est exécuté par un processeur, amènent le processeur à réaliser le procédé selon la revendication 8.
